# EUROPEAN PATENT APPLICATION

(11) **EP 4 379 010 A1**
(43) Date of publication of application: **05.06.2024**
(21) Application number: 22849934.9
(22) Date of filing: 29.07.2022
(51) Int. Cl.: C09D 167/04, C09D 7/63, C09D 7/40, C09D 5/00

(54) **BIODEGRADABLE COATING COMPOSITION, METHOD FOR MANUFACTURING SAME, AND BIODEGRADABLE ARTICLE USING SAME**

(30) Priority: 30.07.2021 KR 20210101050
(71) Applicant: CJ CheilJedang Corporation, Seoul 04560 (KR)
(72) Inventor: PARK, Soyun, Seoul 04560 (KR); SHIM, Yoo-Kyoung, Seoul 04560 (KR); PARK, Jeung Yil, Seoul 04560 (KR); CHUNG, Jin Su, Seoul 04560 (KR)
(74) Representative: Dehns
(86) International application number: PCT/KR2022/011219
(87) International publication number: WO 2023/008960

(57) **Abstract**

The present invention relates to a biodegradable coating composition, a method for manufacturing same, and a biodegradable article using same. Specifically, according to one embodiment of the present invention, the biodegradable coating composition is a copolymerized polyhydroxyalkanoate resin that comprises a polyhydroxyalkanoate (PHA) resin and a dispersant having a degree of saponification of at least 42 mol%, and comprises 4-hydroxybutyrate (4-HB) repeating units. Due to including 0.1 wt% to 60 wt% of the 4-hydroxybutyrate (4-HB) repeating units with respect to the total weight of the copolymerized polyhydroxyalkanoate resin, the biodegradable coating composition has excellent biodegradability and biocompatibility and can thus improve dispersibility, coating properties, water resistance, and processability while being environmentally friendly.

## Description

### Technical Field

The present invention relates to a biodegradable coating composition, to a process for preparing the same, and to a biodegradable article using the same.

### Background Art

In recent years, as concerns about environmental problems have increased, research on the treatment and recycling of various household wastes has been actively conducted. Specifically, although polymer materials, which are inexpensive and have excellent processability, are widely used to manufacture various products such as paper, films, fibers, packaging materials, bottles, and containers, when the lifespan of these products is over, harmful substances may be discharged when they are incinerated, and it takes hundreds of years depending on their types to completely decompose naturally.

Therefore, research on biodegradable polymers continues, which can be decomposed within a short period of time to enhance environmental friendliness, while enhancing mechanical properties, oil resistance, water resistance, and processability, and increasing the lifespan of products themselves, thereby reducing the amount of waste or enhancing their recyclability.

Polyhydroxyalkanoates (PHAs) are biodegradable polymers composed of several types of hydroxyl carboxylic acids produced by numerous microorganisms and used as intracellular storage materials. Polyhydroxyalkanoates have physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

Meanwhile, in order to enhance the service lifespan and recyclability of various products such as paper, films, fibers, packaging materials, bottles, containers, and the like, it is important to enhance mechanical properties such as strength, water resistance, and oil resistance. In particular, food packaging materials for packing foods that are rich in moisture or oil, such as fruits, vegetables, bread, cookies, ice cream, and the like, have a problem in that the packaging material is torn by moisture or oil from the food, thereby contaminating the food or having a short service lifespan.

In order to enhance mechanical properties, water resistance, and oil resistance, a process of forming a coating layer on the surface of a product is used; however, there is a problem in that biodegradability and recyclability are deteriorated due to the coating layer. Specifically, an additional step may be required to remove the coating layer, or the biodegradability and recyclability of a product may be deteriorated due to the coating layer. Accordingly, there is a need for the development of a biodegradable coating composition that is excellent in dispersibility, coatability, water resistance, and processability while being environmentally friendly by virtue of excellent biodegradability and biocompatibility.

### [Prior Art Document]

### [Patent Document]

(Patent Document 1) Korean Laid-open Patent Publication No. 2012-0103158

### Detailed Description of the Invention

### Technical Problem

Accordingly, the present invention aims to provide a biodegradable coating composition capable of enhancing dispersibility, coatability, water resistance, and processability while being environmentally friendly by virtue of excellent biodegradability and biocompatibility, a process for preparing the same, and a biodegradable article using the same.

### Solution to the Problem

The biodegradable coating composition according to an embodiment of the present invention comprises a polyhydroxyalkanoate (PHA) resin; and a dispersant having a degree of saponification of 42% by mole or more, wherein the polyhydroxyalkanoate resin is a copolymerized polyhydroxyalkanoate resin comprising a 4-hydroxybutyrate (4-HB) repeat unit and comprises the 4-hydroxybutyrate (4-HB) repeat unit in an amount of 0.1% by weight to 60% by weight based on the total weight of the copolymerized polyhydroxyalkanoate resin.

The process for preparing a biodegradable coating composition according to another embodiment of the present invention comprises mixing and stirring a polyhydroxyalkanoate (PHA) resin and a dispersant having a degree of saponification of 42% by mole or more, wherein the polyhydroxyalkanoate resin is a copolymerized polyhydroxyalkanoate resin comprising a 4-hydroxybutyrate (4-HB) repeat unit and comprises the 4-hydroxybutyrate (4-HB) repeat unit in an amount of 0.1% by weight to 60% by weight based on the total weight of the copolymerized polyhydroxyalkanoate resin.

The biodegradable article according to another embodiment of the present invention comprises a substrate; and a biodegradable coating layer, wherein the biodegradable coating layer comprises a polyhydroxyalkanoate (PHA) resin and a dispersant having a degree of saponification of 42% by mole or more, wherein the polyhydroxyalkanoate resin is a copolymerized polyhydroxyalkanoate resin comprising a 4-hydroxybutyrate (4-HB) repeat unit and comprises the 4-hydroxybutyrate (4-HB) repeat unit in an amount of 0.1% by weight to 60% by weight based on the total weight of the copolymerized polyhydroxyalkanoate resin.

### Advantageous Effects of the Invention

As the biodegradable coating composition according to an embodiment of the present invention comprises a polyhydroxyalkanoate (PHA) resin and a dispersant having a degree of saponification of 42% by mole or more, dispersibility, coatability, water resistance, and processability can be enhanced.

In particular, the biodegradable coating composition comprises a copolymerized polyhydroxyalkanoate resin comprising a 4-hydroxybutyrate (4-HB) repeat unit in a specific amount as the polyhydroxyalkanoate resin, along with a specific dispersant having excellent compatibility with the copolymerized polyhydroxyalkanoate resin, and it has excellent dispersibility although it contains the dispersant in a small amount.

Therefore, a coating layer formed using the biodegradable coating composition has excellent biodegradability and biocompatibility, is environmentally friendly, and has excellent dispersibility and coatability. In particular, a biodegradable article comprising the coating layer has excellent water resistance, so that it can exhibit excellent properties when applied as articles that require water resistance, such as food packaging materials for packaging foods with high moisture content.

### Brief Description of the Drawing

Fig. 1 shows a biodegradable article according to an embodiment of the present invention.
Fig. 2 shows a biodegradable article according to another embodiment of the present invention.

### [Explanation of Reference Numerals]

1: biodegradable article
100: substrate
200: biodegradable coating layer

### Best Mode for Carrying out the Invention

Hereinafter, the present invention will be described in detail. The present invention is not limited to the disclosures given below, but it may be modified into various forms as long as the gist of the invention is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about," unless otherwise indicated.

In the present specification, in the case where an element is mentioned to be formed "on" or "under" another element, it means not only that one element is directly formed "on" or "under" another element, but also that one element is indirectly formed on or under another element with other element(s) interposed between them.

Throughout the present specification, the terms first, second, and the like are used to describe various components. But the components should not be limited by the terms. The terms are used only for the purpose of distinguishing one component from another.

In the present specification, the references for "one side" and "the other side" or "on" and "under" of each component are explained based on the drawings. These terms are only for distinguishing components and may be interchanged with each other in actual application.

In addition, for the sake of description, the sizes of individual elements in the appended drawings may be exaggeratedly depicted and do not indicate the actual sizes. In addition, the same reference numerals refer to the same elements throughout the specification.

### Biodegradable coating composition

The biodegradable coating composition according to an embodiment of the present invention comprises a polyhydroxyalkanoate (PHA) resin; and a dispersant having a degree of saponification of 42% by mole or more, wherein the polyhydroxyalkanoate resin is a copolymerized polyhydroxyalkanoate resin comprising a 4-hydroxybutyrate (4-HB) repeat unit and comprises the 4-hydroxybutyrate (4-HB) repeat unit in an amount of 0.1% by weight to 60% by weight based on the total weight of the copolymerized polyhydroxyalkanoate resin.

The solids content of the biodegradable coating composition may be 10% by weight to 60% by weight. For example, the solids content of the biodegradable coating composition may be 10% by weight to 60% by weight, 15% by weight to 55% by weight, 20% by weight to 55% by weight, 25% by weight to 50% by weight, 30% by weight to 45% by weight, or 35% by weight to 45% by weight.

The biodegradable coating composition may have an acidity of 3 to 11. For example, the acidity of the biodegradable coating composition may be 3 to 11, 3 to 8, 3 to 6, 3 to 5, 7 to 11, 7.5 to 11, or 8 to 11.

In addition, the biodegradable coating composition may have a viscosity of 100 mPa s to 1,000 mPa·s. For example, the viscosity of the biodegradable coating composition may be 100 mPa s to 1,000 mPa s, 115 mPa·s to 1,000 mPa s, 130 mPa s to 1,000 mPa s, 155 mPa s to 1,000 mPa s, 155 mPa s to 850 mPa s, 155 mPa s to 600 mPa s, 160 mPa s to 450 mPa s, 160 mPa s to 300 mPa s, 165 mPa s to 250 mPa s, or 165 mPa s to 230 mPa s.

### Polyhydroxyalkanoate (PHA) resin

A polyhydroxyalkanoate (PHA) resin has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibits complete biodegradability, and is excellent in biocompatibility.

Specifically, the PHA resin is a natural thermoplastic polyester polymer that accumulates in microbial cells. Since it is a biodegradable material, it can be composted and finally decomposed into carbon dioxide, water, and organic waste without generating toxic waste. In particular, since PHA is biodegradable even in soil and sea, when the biodegradable coating composition and a biodegradable article prepared using the same comprise a PHA resin, it may have environmentally friendly characteristics. Thus, the biodegradable coating composition and a biodegradable article using the same have a great advantage in that they can be used in various fields since they are biodegradable and environmentally friendly.

As the biodegradable coating composition according to an embodiment of the present invention comprises a polyhydroxyalkanoate (PHA) resin, biodegradability can be enhanced without deterioration of mechanical properties.

The PHA resin may be formed by enzyme-catalyzed polymerization of one or more monomer repeat units in living cells.

The PHA resin may be a copolymerized polyhydroxyalkanoate resin (hereinafter, referred to as a copolymerized PHA resin), specifically, a copolymer in which different repeat units are randomly distributed in the polymer chain.

Examples of repeat units that may be contained in the PHA resin include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3- hydroxy decanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA resin may comprise one or more repeat units selected from the above.

Specifically, the PHA resin may comprise one or more repeat units selected from the group consisting of 3-HB, 4-HB, 3-HP, 3-HH, 3-HV, 4-HV, 5-HV, and 6-HH.

More specifically, the PHA resin may comprise a 4-HB repeat unit. That is, the PHA resin may be a copolymerized PHA resin comprising a 4-HB repeat unit.

In addition, the PHA resin may comprise isomers. For example, the PHA resin may comprise structural isomers, enantiomers, or geometric isomers. Specifically, the PHA resin may comprise structural isomers.

In addition, the PHA resin may be a copolymerized PHA resin that comprises a 4-HB repeat unit and further comprises one repeat unit different from the 4-HB repeat unit, or two, three, four, five, six, or more repeat units different from each other. For example, the PHA resin may be poly-3-hydroxybutyrate-co-4-hydroxybutyrate (hereinafter, referred to as 3HB-co-4HB).

According to an embodiment of the present invention, it is important to adjust the content of the 4-HB repeat unit in the copolymerized PHA resin.

Specifically, in order to implement the physical properties desired in the present invention, in particular, in order to increase the biodegradability in soil and sea and to achieve excellent dispersibility, dispersion stability, storage stability, coatability, water resistance, processability, and productivity without deterioration of mechanical properties, it is very important to adjust the content of the 4-HB repeat unit contained in the copolymerized PHA resin.

More specifically, the copolymerized PHA resin may comprise a 4-HB repeat unit in an amount of 0.1% by weight to 60% by weight based on the total weight of the copolymerized PHA resin. For example, the content of a 4-HB repeat unit may be 0.1% by weight to 60% by weight, 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight, based on the total weight of the copolymerized PHA resin.

As the content of a 4-HB repeat unit satisfies the above range, it is possible to increase the biodegradability in soil and sea and to further enhance such characteristics as dispersibility, dispersion stability, storage stability, coatability, oil resistance, processability, and productivity without deterioration of mechanical properties.

According to an embodiment of the present invention, the PHA resin may be a copolymerized PHA resin whose crystallinity has been adjusted. Specifically, the PHA resin comprises one or more of a 4-HB repeat unit, and the content of the 4-HB repeat unit may be controlled to adjust the crystallinity of the PHA resin.

In addition, the PHA resin may be a copolymerized polyhydroxyalkanoate (PHA) resin that comprises at least one repeat unit selected from the group consisting of 3-hydroxybutyrate (3-HB), 4-hydroxybutyrate (4-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

Specifically, the copolymerized PHA resin may comprise a 4-HB repeat unit and further comprises one or more repeat units selected from the group consisting of a 3-HB repeat unit, a 3-HP repeat unit, a 3-HH repeat unit, a 3-HV repeat unit, a 4-HV repeat unit, a 5-HV repeat unit, and a 6-HH repeat unit. More specifically, the PHA resin may comprise a 4-HB repeat unit and a 3-HB repeat unit.

For example, the copolymerized PHA resin may comprise a 3-HB repeat unit in an amount of 20% by weight or more, 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less, based on the total weight of the copolymerized PHA resin.

The PHA resin whose crystallinity is adjusted may be one in which its crystallinity and amorphousness are adjusted as the irregularities are increased in its molecular structure. Specifically, the types or ratios of the monomers or the types or contents of the isomers may be adjusted.

According to an embodiment of the present invention, the PHA resin may comprise two or more types of PHA resins having different crystallinities. Specifically, the PHA resin may be prepared by mixing two or more types of PHA resins having different crystallinities to have the content of a 4-HB repeat unit in the specific range.

Specifically, the PHA resin may comprise a first PHA resin that is a semi-crystalline PHA resin.

As a semi-crystalline PHA (hereinafter, referred to as scPHA) resin with controlled crystallinity, the first PHA resin may comprise a 4-HB repeat unit in an amount of 0.1% by weight to 30% by weight. For example, the first PHA resin may comprise a 4-HB repeat unit in an amount of 0.1% by weight to 30% by weight, 0.5% by weight to 30% by weight, 1% by weight to 30% by weight, 3% by weight to 30% by weight, 1% by weight to 28% by weight, 1% by weight to 25% by weight, 1% by weight to 24% by weight, 1% by weight to 15% by weight, 2% by weight to 25% by weight, 3% by weight to 25% by weight, 3% by weight to 24% by weight, 5% by weight to 24% by weight, 7% by weight to 20% by weight, 10% by weight to 20% by weight, 15% by weight to 25% by weight, or 15% by weight to 24% by weight.

The glass transition temperature (Tg) of the first PHA resin may be -30°C to 80°C, - 30°C to 10°C, -25°C to 5°C, -25°C to 0°C, -20°C to 0°C, or -15°C to 0°C. The crystallization temperature (Tc) of the first PHA resin may be 70°C to 120°C, 75°C to 120°C, or 75°C to 115°C. The melting temperature (Tm) of the first PHA resin may be 105°C to 165°C, 110°C to 160°C, 115°C to 155°C, or 120°C to 150°C.

The first PHA resin may have a weight average molecular weight of 10,000 g/mole to 1,200,000 g/mole, 50,000 g/mole to 1,100,000 g/mole, 100,000 g/mole to 1,000,000 g/mole, 100,000 g/mole to 900,000 g/mole, 200,000 g/mole to 800,000 g/mole, 200,000 g/mole to 600,000 g/mole, or 200,000 g/mole to 400,000 g/mole.

In addition, the PHA resin may comprise a second PHA, which is an amorphous PHA resin with controlled crystallinity.

As an amorphous PHA (hereinafter, referred to as aPHA) resin with controlled crystallinity, the second PHA resin may comprise a 4-HB repeat unit in an amount of 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight.

The glass transition temperature (Tg) of the second PHA resin may be -45°C to -10°C, -35°C to -15°C, -35°C to -20°C, or -30°C to -20°C.

In addition, the crystallization temperature (Tc) of the second PHA resin may not be measured or may be 60°C to 120°C, 60°C to 110°C, 70°C to 120°C, or 75°C to 115°C. The melting temperature (Tm) of the second PHA resin may not be measured or may be 100°C to 170°C, 100°C to 160°C, 110°C to 160°C, or 120°C to 150°C.

The second PHA resin may have a weight average molecular weight of 10,000 g/mole to 1,200,000 g/mole, 10,000 g/mole to 1,000,000 g/mole, 50,000 g/mole to 1,000,000 g/mole, 200,000 g/mole to 1,200,000 g/mole, 300,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 400,000 g/mole.

The first PHA resin and the second PHA resin may be distinguished in terms of the content of a 4-HB repeat unit and may have at least one characteristic selected from the group consisting of the above glass transition temperature (Tg), crystallization temperature (Tc), and melting temperature (Tm). Specifically, the first PHA resin and the second PHA resin may be distinguished in terms of the content of a 4-HB repeat unit, glass transition temperature (Tg), crystallization temperature (Tg), melting temperature (Tm), and the like.

According to an embodiment of the present invention, the PHA resin may comprise the first PHA resin or both the first PHA resin and the second PHA resin.

Specifically, as the PHA resin comprises the first PHA resin, which is a semi-crystalline PHA resin, or both the first PHA resin, which is a semi-crystalline PHA resin, and the second PHA resin, which is an amorphous PHA resin, more specifically, as the contents of the first PHA resin and the second PHA resin are adjusted, it is possible to further enhance dispersibility, dispersion stability, storage stability, coatability, and processability.

In addition, the glass transition temperature (Tg) of the PHA resin may be -45°C to 80°C, -35°C to 80°C, -30°C to 80°C, -25°C to 75°C, -20°C to 70°C, -35°C to 5°C, -25°C to 5°C, -35°C to 0°C, -25°C to 0°C, -30°C to -10°C, -35°C to -15°C, -35°C to -20°C, -20°C to 0°C, -15°C to 0°C, or -15°C to -5°C.

In addition, the crystallization temperature (Tc) of the PHA resin may not be measured or may be 60°C to 120°C, 60°C to 110°C, 70°C to 120°C, 75°C to 120°C, 75°C to 115°C, 75°C to 110°C, or 90°C to 110°C.

The melting temperature (Tm) of the PHA resin may not be measured or may be 100°C to 170°C, 105°C to 170°C, 105°C to 165°C, 110°C to 160°C, 115°C to 155°C, 110°C to 150°C, 120°C to 150°C, or 120°C to 140°C.

In addition, the PHA resin may have a weight average molecular weight of 10,000 g/mole to 1,200,000 g/mole. For example, the weight average molecular weight of the PHA resin may be 50,000 g/mole to 1,200,000 g/mole, 100,000 g/mole to 1,200,000 g/mole, 50,000 g/mole to 1,000,000 g/mole, 100,000 g/mole to 1,000,000 g/mole, 200,000 g/mole to 1,200,000 g/mole, 250,000 g/mole to 1,150,000 g/mole, 300,000 g/mole to 1,100,000 g/mole, 350,000 g/mole to 1,000,000 g/mole, 350,000 g/mole to 950,000 g/mole, 100,000 g/mole to 900,000 g/mole, 200,000 g/mole to 800,000 g/mole, 200,000 g/mole to 700,000 g/mole, 250,000 g/mole to 650,000 g/mole, 200,000 g/mole to 400,000 g/mole, 300,000 g/mole to 800,000 g/mole, 300,000 g/mole to 600,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole,600,000 g/mole to 900,000 g/mole, or 500,000 g/mole to 900,000 g/mole.

The PHA resin may have a crystallinity of 90% or less as measured by a differential scanning calorimeter (DSC). For example, the crystallinity of the PHA resin may be measured by differential scanning calorimetry and may be 90% or less, 85% or less, 80% or less, 75% or less, or 70% or less.

In addition, the PHA resin may have an average particle size of less than 150 µm. For example, the average particle size of the PHA resin may be less than 150 µm, 140 µm or less, 130 µm or less, 120 µm or less, 100 µm or less, 90 µm or less, 85 µm or less, 50 µm or less, or 35 µm or less, and may be 25 µm to less than 150 µm, 25 µm to 120 µm, 25 µm to 85 µm, 25 µm to 50 µm, 25 µm to 40 µm, 60 µm to 135 µm, 65 µm to 110 µm, 70 µm to 100 µm, or 75 µm to 95 µm.

The average particle size of the PHA resin may be measured with a nano particle size analyzer (e.g., Zetasizer Nano ZS). Specifically, the PHA resin is subjected to measurement of average particle size through dynamic light scattering (DLS) at a temperature of 25°C and a measurement angle of 175° using Zetasizer Nano ZS (manufacturer: Marven). In such an event, the value of the peak derived through the polydispersity index (PDI) in the confidence interval of 0.5 was taken as the particle size.

The PHA resin may have a polydispersity index (PDI) of less than 3. For example, the polydispersity index of the PHA resin may be less than 3, 2.9 or less, 2.7 or less, or 2.65 or less.

As the average particle size and polydispersity index of the PHA resin satisfy the above ranges, dispersibility, dispersion stability, storage stability, coatability, and processability can be further enhanced.

In addition, the PHA resin may be obtained by cell disruption using a mechanical method or a physical method. Specifically, since the PHA resin is a natural thermoplastic polyester polymer that accumulates in microbial cells and has a relatively large average particle size, it may be obtained through a disruption process in order to enhance dispersibility, coatability, and processability.

For example, the PHA resin may be in the form of fine particles. Specifically, the PHA resin obtained by cell disruption using a mechanical method or a physical method may be a powder in the form of fine particles.

According to another embodiment of the present invention, the biodegradable coating composition may further comprise a biodegradable polymer.

Specifically, the biodegradable polymer may comprise at least one selected from the group consisting of polylactic acid (PLA), polybutylene adipate terephthalate (PBAT), polybutylene succinate (PBS), thermoplastic starch (TPS), polybutylene succinate terephthalate (PBST), polyethylene terephthalate (PET), polybutylene succinate adipate (PBSA), polybutylene adipate (PBA), polypropylene (PP), polyethylene (PE), and polycaprolactone (PCL). As the biodegradable coating composition further comprises the biodegradable polymer, it may be more advantageous for controlling characteristics such as mechanical properties.

In addition, the biodegradable coating composition may comprise the PHA resin in an amount of 10% by weight to 70% by weight based on the total weight of the biodegradable coating composition on the basis of solids content. For example, the content of the PHA resin may be 10% by weight to 70% by weight, 20% by weight to 65% by weight, 25% by weight to 55% by weight, 30% by weight to 45% by weight, or 35% by weight to 45% by weight, based on the total weight of the biodegradable coating composition on the basis of solids content.

### Dispersant

According to an embodiment of the present invention, the biodegradable coating composition comprises a dispersant having a degree of saponification of 42% by mole or more. As the biodegradable coating composition comprises the dispersant, dispersibility, dispersion stability, storage stability, coatability, water resistance, and processability can be enhanced.

The dispersant may be at least one selected from the group consisting of a phosphoric acid-based dispersant, a fatty acid-based dispersant, an acrylic-based dispersant, a urethane-based dispersant, and an epoxy-based dispersant. It may be a polymeric dispersant comprising at least one selected from the group consisting of carboxylic acids, amines, isocyanates, and derivatives thereof.

For example, the dispersant may be at least one selected from the group consisting of polyvinyl alcohol, sodium dodecylbenzene sulfonate, polyvinylpyrrolidone, methyl polyethylene alkyl ether, alkyl benzene sulfonate, nonylphenol ether sulfate, sodium lauryl sulfate, lithium dodecyl sulfate, alkyl phosphate, glyceryl esters, and polypropylene glycol esters.

According to an embodiment of the present invention, the dispersant may be polyvinyl alcohol.

The polyvinyl alcohol may be obtained by polymerizing polyvinyl acetate (PVAc) and then substituting hydrophobic CH₃COO- with hydrophilic -OH through a hydrolysis reaction. In such an event, the degree of substitution with -OH relative to the total, that is, the ratio of CH₃COO- to -OH is the degree of saponification or hydrolysis. The saponification degree may vary depending on the molecular weight of polyvinyl alcohol or its distribution characteristics in the -OH substitution reaction and may have an impact on the physical properties of a final resin.

For example, the saponification degree of the dispersant may be 42% by mole or more, 55% by mole or more, 65% by mole or more, 80% by mole or more, 85% by mole or more, or 90% by mole or more, and may be 42% by mole to 99% by mole, 75% by mole to 99% by mole, or 80% by mole to 98% by mole.

If the saponification degree satisfies the above range, dispersibility, dispersion stability, and storage stability can be enhanced. Since it may have an appropriate viscosity for coating, coatability, productivity, and processability can be enhanced. Specifically, if the saponification degree is outside the above range, the solubility or dispersibility of the dispersant is very low, whereby it may be impossible to form a coating layer using the biodegradable coating composition.

In addition, the degree of polymerization refers to the number of monomers bound to one chain of the polymer. The average degree of polymerization of the dispersant may be 200 or less. For example, the average degree of polymerization of the dispersant may be 200 or less, 180 or less, or 150 or less, and may be 80 to 200, 90 to 200, or 100 to 200. As the average degree of polymerization satisfies the above range, dispersibility, dispersion stability, storage stability, coatability, water resistance, and processability can be enhanced.

As the degree of saponification and the degree of polymerization of the dispersant each satisfy the above ranges, dispersibility, dispersion stability, storage stability, coatability, water resistance, and processability can be enhanced. In particular, since a dispersant whose degree of saponification and degree of polymerization satisfy the above ranges is very good in compatibility with the PHA resin having the above-mentioned characteristics, dispersibility, dispersion stability, storage stability, coatability, water resistance, and processability can be further enhanced.

In addition, the biodegradable coating composition may comprise the dispersant in an amount of 0.01% by weight to 10% by weight based on the total weight of the biodegradable coating composition on the basis of solids content. For example, the content of the dispersant may be 0.01% by weight to 10% by weight, 0.01% by weight to 8% by weight, 0.05% by weight to 7% by weight, 0.1% by weight to 6% by weight, 0.1% by weight to 5% by weight, 1% by weight to 5% by weight, 1.5% by weight to 5% by weight, 0.1% by weight to 3% by weight, 0.5% by weight to 3.5% by weight, 1% by weight to 3% by weight, or 1.5% by weight to 3% by weight, based on the total weight of the biodegradable coating composition on the basis of solids content.

Although the biodegradable coating composition comprises a smaller amount of dispersant than the conventional one, it has excellent dispersibility, dispersion stability, storage stability, coatability, and processability.

The biodegradable coating composition may further comprise at least one additive selected from the group consisting of rheology modifiers, antioxidants, stabilizers, antibacterial agents, antifoaming agents, preservatives, and pH adjusting agents.

The rheology modifier may be at least one selected from the group consisting of gum, clay mineral, cellulose derivatives, cellulose-based modifiers, acrylic-based modifiers, and urethane-based modifiers. For example, the rheology modifier may be one of gum, clay mineral, or cellulose-based modifier, or may be a mixture of two types, such as gum and clay mineral or gum and cellulose-based modifier.

The gum may be at least one selected from the group consisting of xanthan gum, guar gum, gellan gum, locust gum, Arabic gum, carrageenan, karaya gum, gati gum, tara gum, tamarind gum, and tragacanth gum. The clay mineral may be at least one selected from the group consisting of bentonite, smectite, etherpulgite, montmorillonite, kaolinite, sericite, and illite.

The cellulose derivative may be at least one selected from the group consisting of casein, sodium caseinate, and sodium alginate. The cellulose-based modifier may be at least one selected from the group consisting of methyl cellulose, hydroxypropyl cellulose, and methylhydroxypropyl cellulose.

In addition, the rheology modifier may have a branched, linear, plate-like, irregular, spherical, or rod-like shape. As the rheology modifier has the above shape, coatability, processability, and productivity can be further enhanced.

The rheology modifier may be employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.01% by weight to 4% by weight, 0.01% by weight to 3% by weight, 0.02% by weight to 2% by weight, 0.02% by weight to 1.5% by weight, or 0.03% by weight to 1% by weight, based on the total weight of the biodegradable coating composition on the basis of solids content.

The antioxidant is an additive for preventing decomposition by ozone or oxygen, preventing oxidation during storage, and preventing deterioration of physical properties. Any commonly used antioxidant may be used as long as the effect of the present invention is not impaired.

Specifically, the antioxidant may comprise at least one selected from the group consisting of hindered phenol-based antioxidants and phosphite-based (phosphorus-based) antioxidants.

For example, the hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5-methylphenyl)propionyloxy]-1,1-dimethylethyl]-2,4,8,10-tetraoxaspiro[5.5]undecane.

In addition, the phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The antioxidant may be employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the biodegradable coating composition on the basis of solids content.

The stabilizer is an additive for protecting against oxidation and heat and preventing color change. Any commonly used stabilizer may be used as the stabilizer as long as the effect of the present invention is not impaired.

Specifically, the stabilizer may be at least one selected from the group consisting of trimethyl phosphate, triphenyl phosphate, trimethyl phosphine, phosphoric acid, and phosphorous acid.

The stabilizer may be employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the biodegradable coating composition on the basis of solids content.

The antibacterial agent may be at least one natural antibacterial agent selected from the group consisting of organic acids, bacteriocins, and calcium agents or colloids, or compounds containing elements such as silver. It may be at least one selected from the group consisting of polylysine, benzisothiazolinone, vinegar powder, chitooligosaccharide, hydrogen peroxide, ethylenediaminetetraacetic acid, potassium sorbate, sorbic acid, propionic acid, potassium propionate, sodium benzoate, 1,2-hexanediol, and 1,2-octanediol.

The antibacterial agent may be employed in an amount of 0.01% by weight to 5% by weight, 0.01% by weight to 3% by weight, 0.01% by weight to 1% by weight, 0.1% by weight to 1% by weight, 0.2% by weight to 1% by weight, or 0.3% by weight to 1% by weight, based on the total weight of the biodegradable coating composition on the basis of solids content.

In addition, the antifoaming agent is an additive for preventing or reducing foaming. Any commonly used antifoaming agent may be used as the antifoaming agent as long as the effect of the present invention is not impaired.

For example, the antifoaming agent may be at least one selected from the group consisting of an alcohol-based antifoaming agent, a polar compound-based antifoaming agent, an inorganic particle-based antifoaming agent, and a silicone-based antifoaming agent, or may be at least one selected from the group consisting of ethyl alcohol, 2-ethylhexanol, polysiloxane, dimethylpolysiloxane, silicone paste, silicone emulsion, silicone treatment powder, fluorosilicone, distearic acid, ethylene glycol, and natural wax.

The antifoaming agent may be employed in an amount of 0.0001% by weight to 5% by weight, 0.0001% by weight to 3% by weight, 0.0001% by weight to 1% by weight, 0.001% by weight to 1% by weight, or 0.001% by weight to 0.5% by weight, based on the total weight of the biodegradable coating composition on the basis of solids content.

In addition, the preservative may be at least one natural preservative selected from the group consisting of hydroxyacetophenone, centella asiatica extract, 1,2-hexanediol, and 1,3-butanediol, and may be at least one preservative selected from the group consisting of 1,2-benzisothiazolin-3-one and potassium benzoate, but it is not limited thereto.

The preservative may be employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the biodegradable coating composition on the basis of solids content.

In addition, the pH adjusting agent refers to a material that is added to a solution to adjust the pH. It may comprise both a pH reducing agent for decreasing the pH and a pH increasing agent for increasing the pH. Specifically, the pH reducing agent may be a strongly acidic substance such as sulfuric acid and hydrochloric acid or an aqueous ammonium salt solution, and the pH increasing agent may be a basic substance such as ammonia water, sodium hydroxide, lithium hydroxide, and potassium hydroxide, or an aqueous acetate salt solution, but it is not limited thereto.

For example, the pH increasing agent may be at least one selected from the group consisting of acetic acid, lactic acid, hydrochloric acid, phosphoric acid, sodium hydroxide, citric acid, malic acid, fumaric acid, potassium phosphate, sodium bicarbonate, and sodium phosphate.

The pH adjusting agent may be employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the biodegradable coating composition on the basis of solids content.

### Process for preparing a biodegradable coating composition

The process for preparing a biodegradable coating composition according to another embodiment of the present invention comprises mixing and stirring a polyhydroxyalkanoate (PHA) resin and a dispersant having a degree of saponification of 42% by mole or more, wherein the polyhydroxyalkanoate resin is a copolymerized polyhydroxyalkanoate resin comprising a 4-hydroxybutyrate (4-HB) repeat unit and comprises the 4-hydroxybutyrate (4-HB) repeat unit in an amount of 0.1% by weight to 60% by weight based on the total weight of the copolymerized polyhydroxyalkanoate resin.

Details on the PHA resin and the dispersant are as described above.

Specifically, a polyhydroxyalkanoate (PHA) resin and a dispersant having a degree of saponification of 42% by mole or more may be mixed and stirred to prepare a biodegradable coating composition.

In addition, a solvent may be further added in the mixing of the PHA resin and the dispersant. For example, the solvent may be water, distilled water, or a hydrophilic solvent. Specifically, the solvent may be water or distilled water, or a mixture of water or distilled water and a hydrophilic solvent. For example, the hydrophilic solvent may be at least one selected from the group consisting of methanol, ethanol, n-propanol, isopropanol, n-butanol, isobutanol, sec-butanol, tert-butanol, n-amyl alcohol, isoamyl alcohol, sec-amyl alcohol, tert-amyl alcohol, 1-ethyl-1-propanol, 2-methyl-1-butanol, n-hexanol, and cyclohexanol.

The stirring step may be carried out for 10 minutes to 60 minutes using a homogenizer at a rate of 10% to 80% of the maximum rotational speed per minute (rpm). For example, the stirring step may be carried out for 10 minutes to 60 minutes, 20 minutes to 60 minutes, 25 minutes to 55 minutes, 25 minutes to 45 minutes, or 25 minutes to 40 minutes using a homogenizer at a rate of 10% to 80%, 15% to 75%, 20% to 60%, 20% to 50%, 40% to 80%, 45% to 70%, 60% to 80%, 65% to 75%, or 60% to 70% of the maximum rotational speed per minute (rpm).

In addition, the stirring step may be carried out for 15 minutes to 60 minutes at 750 rpm to 10,000 rpm. For example, the stirring step may be carried out for 15 minutes to 60 minutes, 20 minutes to 50 minutes, 20 minutes to 40 minutes, or 25 minutes to 35 minutes using a centrifuge, an agitator, or a homogenizer at 750 rpm to 10,000 rpm, 1,000 rpm to 10,000 rpm, 2,000 rpm to 10,000 rpm, 4,000 rpm to 10,000 rpm, 750 rpm to 8,000 rpm, 900 rpm to 7,000 rpm, 1,000 rpm to 5,000 rpm, 1,500 rpm to 4,000 rpm, 1,500 rpm to 3,000 rpm, 6,000 rpm to 10,000 rpm, 6,500 rpm to 9,500 rpm, 7,000 rpm to 9,000 rpm, or 7,500 rpm to 8,500 rpm.

As the stirring step is carried out under the above conditions, dispersibility, dispersion stability, storage stability, coatability, and processability can be further enhanced.

According to another embodiment of the present invention, a filtering step and a washing step may be further carried out after the mixing and stirring step.

In addition, a redispersion step may be further carried out after the filtering step and the washing step.

More specifically, the PHA and the dispersant may be mixed and stirred to prepare a first aqueous PHA dispersion, the first aqueous PHA dispersion may be filtered and washed to prepare a second aqueous PHA dispersion, and the second aqueous PHA dispersion may be redispersed in a solvent to prepare a final biodegradable coating composition.

The solids content of the second aqueous dispersion may be 10% by weight to 60% by weight. For example, the solids content of the second aqueous dispersion may be 10% by weight to 60% by weight, 15% by weight to 55% by weight, 20% by weight to 55% by weight, 25% by weight to 50% by weight, 30% by weight to 45% by weight, or 35% by weight to 45% by weight.

The filtration step may be carried out using a filter medium such as paper, a woven fabric, a nonwoven fabric, a screen, a polymer membrane, or a wedge wire, and may be carried out using a suction filter, a pressure filter, a membrane separator, a vacuum filter, a reduced-pressure vacuum filter, an industrial filter press, a tube press, a plate press, a gauge press, a belt press, a screw press, a disk press, a pressurizing function press, or a centrifuge.

The washing step and the redispersion step may be carried out using the above solvent. Specifically, the solvent used in the washing and redispersion steps may be water or distilled water, or a mixture of water or distilled water and a hydrophilic solvent.

The redispersion step may be carried out for 10 minutes to 60 minutes, 20 minutes to 60 minutes, 25 minutes to 55 minutes, 25 minutes to 45 minutes, or 25 minutes to 40 minutes using a homogenizer at a rate of 10% to 80%, 15% to 75%, 20% to 60%, 20% to 50%, 40% to 80%, 45% to 70%, 60% to 80%, 65% to 75%, or 60% to 70% of the maximum rotational speed (rpm).

### Process for preparing a biodegradable article

The process for preparing a biodegradable article according to another embodiment of the present invention comprises preparing a biodegradable coating composition; and forming a biodegradable coating layer from the biodegradable coating composition.

Details on the preparation of a biodegradable coating composition are as described above.

Thereafter, a biodegradable coating layer is formed on one side of a substrate using the biodegradable coating composition.

According to an embodiment of the present invention, the step of forming a biodegradable coating layer may be carried out by applying the biodegradable coating composition on a substrate and drying it.

The substrate is not limited as long as it can form a biodegradable coating layer on the surface of the substrate. For example, the substrate may be at least one selected from the group consisting of paper, kraft paper, a fabric, a nonwoven fabric, a polyethylene terephthalate (PET) film, a polyester film such as polybutylene succinate (PBS), polybutylene adipate (PBA), polybutylene adipate terephthalate (PBAT), and polybutylene succinate terephthalate (PBST), and a polyimide (PI) film.

Specifically, the substrate may preferably be a substrate of a single material from the viewpoint of enhancing the coatability of the substrate. The substrate may be paper, kraft paper, fabric, or non-woven fabric, but it is not limited thereto. In addition, when the substrate comprises paper or kraft paper, it may be more advantageous for providing an environmentally friendly packaging material since it has better biodegradability than other plastic materials.

The substrate may have a thickness of 15 µm or more. For example, the thickness of the substrate may be 15 µm or more, 20 µm or more, 50 µm or more, 70 µm or more, 100 µm or more, 130 µm or more, 150 µm or more, 200 µm or more, 300 µm or more, or 500 µm or more.

In addition, the substrate may have a basis weight of 30 g/m² to 500 g/m². For example, when the substrate is paper, kraft paper, woven, knitted, or non-woven fabric, the basis weight of the substrate may be 30 g/m² to 500 g/m², 30 g/m² to 350 g/m², 30 g/m² to 200 g/m², 50 g/m² to 200 g/m², 80 g/m² to 200 g/m², 100 g/m² to 200 g/m², 130 g/m² to 190 g/m², 150 g/m² to 185 g/m², or 120 g/m² to 320 g/m².

Meanwhile, a barrier layer may be disposed on at least one side of the substrate. An environmentally friendly barrier film may be coated on the surface of the substrate to have moisture and/or oxygen barrier properties, or a functional coating layer having antistatic properties or adhesive properties may be further formed. The functional coating layer may comprise a primer coating layer and an adhesive coating layer, which may have materials and physical properties that are commonly used as long as they do not impair the effect desired in the present invention.

In addition, the biodegradable coating composition may be applied onto the substrate in a coating amount of 5 g/m² to 100 g/m². For example, the coating amount may be 5 g/m² to 100 g/m², 5 g/m² to 85 g/m², 5 g/m² to 70 g/m², 8 g/m² to 60 g/m², 9 g/m² to 50 g/m², 5 g/m² to 50 g/m², 6 g/m² to 40 g/m², 7 g/m² to 30 g/m², 8 g/m² to 20 g/m², or 10 g/m² to 40 g/m². As the coating amount satisfies the above range, coatability, productivity, and processability can be further enhanced.

In addition, the coating may be performed once to form a single coating layer or may be performed twice or more to form a plurality of coating layers. The coating amount can be adjusted within the above range depending on the desired number of coating layers. Specifically, the coating amount may be the total amount applied to a plurality of coating layers.

Once the biodegradable coating composition has been applied onto the substrate, it may be dried for 5 seconds to 30 minutes at 100°C to 200°C. For example, the drying may be carried out for 5 seconds to 30 minutes, 10 seconds to 25 minutes, 20 seconds to 20 minutes, 30 seconds to 15 minutes, or 40 seconds to 10 minutes, at 100°C to 200°C, 110°C to 185°C, 120°C to 180°C, or 130°C to 175°C.

The formation of a biodegradable coating layer may be carried out without particular limitations as long as it is a coating process generally used in the art. For example, the formation of a biodegradable coating layer may be carried out by gravure coating, slot coating, doctor blade coating, spray coating, bar coating, spin coating, or in-line coating, but it is not limited thereto.

### Biodegradable article

The biodegradable article according to another embodiment of the present invention comprises a substrate; and a biodegradable coating layer, wherein the biodegradable coating layer comprises a polyhydroxyalkanoate (PHA) resin and a dispersant having a degree of saponification of 42% by mole or more, wherein the polyhydroxyalkanoate resin is a copolymerized polyhydroxyalkanoate resin comprising a 4-hydroxybutyrate (4-HB) repeat unit and comprises the 4-hydroxybutyrate (4-HB) repeat unit in an amount of 0.1% by weight to 60% by weight based on the total weight of the copolymerized polyhydroxyalkanoate resin.

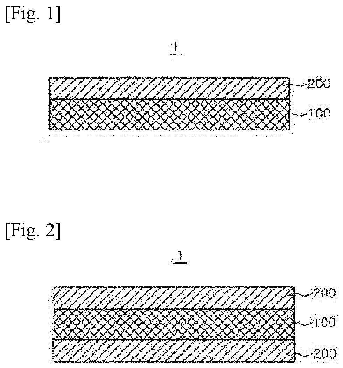

Fig. 1 shows a biodegradable article according to an embodiment of the present invention. Fig. 2 shows a biodegradable article according to another embodiment of the present invention.

Specifically, Fig. 1 illustrates a biodegradable article (1) in which a biodegradable coating layer (200) is formed on one side of a substrate (100). Fig. 2 illustrates a biodegradable article (1) in which a biodegradable coating layer (200) is formed on both sides of a substrate (100).

As the biodegradable article comprises a biodegradable coating layer on one or both sides of a substrate, and the biodegradable coating layer comprises a PHA resin and a dispersant having a degree of saponification of 42% by mole or more, it is environmentally friendly by virtue of excellent biodegradability and biocompatibility and can have excellent dispersibility, coatability, productivity, and processability. In particular, a biodegradable article comprising the coating layer has excellent water resistance, so that it can exhibit excellent properties when applied as articles that require water resistance, such as food packaging materials for packaging foods with high moisture content.

Details on the substrate are as described above.

The biodegradable coating layer may have a water resistance of less than 35 g/m². For example, the water resistance of the coating layer is less than 35 g/m², less than 34 g/m², less than 30 g/m², less than 28 g/m², or less than 27 g/m².

The water resistance may be measured through a Cobb water absorption test (test time: 10 minutes) according to the TAPPI T441 standard.

The biodegradable article comprising the biodegradable coating layer may be a packaging material, a cardboard box, a shopping bag, a disposable tableware, a packaging container, or a paper straw, but it is not limited thereto.

### Embodiments for Carrying Out the Invention

Hereinafter, the present invention will be described in more detail with reference to the following examples. But the following Examples are intended to illustrate the present invention, and the scope of the Examples is not limited thereto only.

### [Example]

### Preparation of a biodegradable coating composition

### Example 1-1

### (1) Preparation of a PHA resin

A polyhydroxyalkanoate (PHA) powder (content of 4-hydroxybutyrate (4-HB): 10% by weight, weight average molecular weight (Mw): 800,000 g/mole, average particle size: 80 µm, polydispersity index (PDI): 2.6, manufacturer: CJ) was prepared. The PHA powder was obtained by physical crushing using a homogenizer (product name: Homomixer Mark II, manufacturer: Primix).

### (2) Preparation of a biodegradable coating composition

A 1-liter glass beaker was charged with 40 parts by weight of the PHA powder, 26 parts by weight of polyvinyl alcohol (PVA, degree of saponification: 80% by mole, average degree of polymerization: 200, manufacturer: Kuraray) having a concentration of 10% as a dispersant, and 34 parts by weight of distilled water (DI water), which was stirred for 30 minutes at 8,000 rpm using a stirrer (product name: Homomixer Mark II, manufacturer: Premix) to prepare a first aqueous dispersion.

Thereafter, the first aqueous dispersion was filtered using a filter paper, washed with water, and additionally added with distilled water to prepare a second aqueous dispersion having a solids content of 40% by weight.

Thereafter, the second aqueous dispersion was subjected to redispersion in the aqueous system using a stirrer (product name: Homomixer Mark II, manufacturer: Premix) to prepare a biodegradable coating composition having a solids content of 40% by weight.

### Example 1-2

A biodegradable coating composition was prepared in the same manner as in Example 1-1, except that, in step (2), polyvinyl alcohol (PVA, degree of saponification: 98% by mole, average degree of polymerization: 200, manufacturer: Kuraray) having a concentration of 10% was used as the dispersant.

### Example 1-3

A biodegradable coating composition was prepared in the same manner as in Example 1-1, except that, in step (1), a polyhydroxyalkanoate (PHA) powder (content of 4-hydroxybutyrate (4-HB): 8% by weight, weight average molecular weight (Mw): 330,000 g/mole, average particle size: 30 µm, polydispersity index (PDI): 2.6, manufacturer: CJ) was prepared.

### Comparative Example 1-1

A biodegradable coating composition was prepared in the same manner as in Example 1-1, except that, in step (2), no dispersant was added.

### Comparative Example 1-2

A biodegradable coating composition was prepared in the same manner as in Example 1-1, except that, in step (2), polyvinyl alcohol (PVA, degree of saponification: 30% by mole, average degree of polymerization: 200, manufacturer: Kuraray) having a concentration of 10% was used as the dispersant.

### Comparative Example 1-3

A biodegradable coating composition was prepared in the same manner as in Example 1-1, except that, in step (2), polyvinyl alcohol (PVA, degree of saponification: 99.5% by mole, average degree of polymerization: 200, manufacturer: Kuraray) having a concentration of 10% was used as the dispersant.

### Comparative Example 1-4

A biodegradable coating composition was prepared in the same manner as in Example 1-1, except that, in step (2), polyvinyl alcohol (PVA, degree of saponification: 70% by mole, average degree of polymerization: 300, manufacturer: Kuraray) having a concentration of 10% was used as the dispersant.

### Comparative Example 1-5

A biodegradable coating composition was prepared in the same manner as in Example 1-1, except that, in step (2), the dispersant was employed in an amount of 200 parts by weight.

**[Table 1]**

| | First aqueous dispersion | | | | | Solids content of the biodegradable coating composition (% by weight) |
|---|---|---|---|---|---|---|
| | PHA resin | | 10% PVA solution | | | |
| | Mw (g/mole) | Content (part by weight) | Degree of saponification (% by mole) | Avg. degree of polymerization | Content (part by weight) | |
| Ex. 1-1 | 800,000 | 40 | 80 | 200 | 26 | 40 |
| Ex. 1-2 | 800,000 | 40 | 98 | 200 | 26 | 40 |
| Ex. 1-3 | 330,000 | 40 | 80 | 200 | 26 | 40 |
| C. Ex. 1-1 | 800,000 | 40 | - | - | - | 40 |
| C. Ex. 1-2 | 800,000 | 40 | 30 | 200 | 26 | 40 |
| C. Ex. 1-3 | 800,000 | 40 | 99.5 | 200 | 26 | 40 |
| C. Ex. 1-4 | 800,000 | 40 | 70 | 300 | 26 | 40 |
| C. Ex. 1-5 | 800,000 | 40 | 80 | 200 | 200 | 40 |

### Preparation of a biodegradable article

### Example 2-1

The biodegradable coating composition prepared in Example 1-1 was applied on a substrate using a Mayer bar coater (manufacturer: RDS) in a coating amount of 20 g/m², which was dried for 10 minutes at 170°C to prepare a biodegradable article with a biodegradable coating layer. Here, uncoated kraft paper (manufacturer: Hansol Paper) with a basis weight of 180 g/m² was used as the substrate.

### Examples 2-2 and 2-3 and Comparative Examples 2-1 to 2-5

Biodegradable articles were each prepared in the same manner as in Example 2-1, except that the biodegradable coating compositions prepared in Examples 1-2 and 1-3 and Comparative Examples 1-1 to 1-5 were used, respectively. Here, the coating amount of the biodegradable coating composition was varied as shown in Table 2 below.

### [Test Example]

### Test Example 1: Dispersion stability

The biodegradable coating compositions prepared in Examples 1-1 to 1-3 and Comparative Examples 1-1 to 1-5 were each placed in a test tube and left for 2 weeks at 50°C. It was then visually evaluated for dispersion stability according to the following evaluation criteria.
⊚: Neither phase separation nor precipitation took place
○: Slight phase separation took place while no precipitation took place
Δ: Some phase separation and precipitation took place
×: Remarkable phase separation and precipitation took place

### Test Example 2: Viscosity

The biodegradable coating compositions prepared in Examples 1-1 to 1-3 and Comparative Examples 1-1 to 1-5 were each measured for viscosity with a DV1MLVTJ0 viscometer (manufacturer: Brookfield) for 60 seconds using spindle number 3 at a rotation speed of 12 rpm.

### Test Example 3: Water resistance

The biodegradable articles prepared in Examples 2-1 to 2-3 and Comparative Examples 2-1 to 2-5 were each measured for water resistance through a Cobb water absorption test (test time: 10 minutes) according to the TAPPI T441 standard.

**[Table 2]**

| | Biodegradable coating composition | | | Biodegradable article |
|---|---|---|---|---|
| | Coating amount (g/m²) | Dispersion stability | Viscosity (mPa·s) | Water resistance (g/m²) |
| Ex. 2-1 | 20 | ⊚ | 200 | 26.76 |
| Ex. 2-2 | 23 | ○ | 210 | 32.32 |
| Ex. 2-3 | 18 | ⊚ | 170 | 26.16 |
| C. Ex. 2-1 | Not coatable | × | Not measurable | Not measurable |
| C. Ex. 2-2 | Not coatable | × | Not measurable | Not measurable |
| C. Ex. 2-3 | Not coatable | × | Not measurable | Not measurable |
| C. Ex. 2-4 | 18.15 | Δ | 150 | 43 |
| C. Ex. 2-5 | Not coatable | × | Not measurable | Not measurable |

As can be seen from Table 2 above, the biodegradable articles of Examples 2-1 to 2-3 had very excellent coatability and water resistance as compared with the articles of Comparative Examples 2-1 to 2-5.

Specifically, as the biodegradable articles of Examples 2-1 to 2-3 comprised a coating layer prepared using each of the biodegradable coating compositions of Examples 1-1 to 1-3 with excellent dispersion stability and viscosity characteristics, they all had excellent water resistance of less than 30 g/m² as a result of the Cobb water absorption test. Accordingly, when the biodegradable article is applied as articles that require water resistance, such as food packaging materials for packaging foods with high moisture content, it can exhibit excellent properties.

In contrast, as the biodegradable articles of Comparative Examples 2-1 to 2-5 comprised a coating layer prepared using each of the biodegradable coating compositions of Comparative Examples 1-1 to 1-5 with poor coatability due to poor dispersion stability and viscosity characteristics, they all had very poor water resistance. In particular, in Comparative Examples 2-1, 2-2, 2-3, and 2-5, the Cobb water absorption test could not be measured due to poor coatability and viscosity characteristics, and the coating composition could not be applied, making it impossible to form a coating layer.

In addition, in Comparative Examples 2-4, a dispersant whose average degree of polymerization did not meet the desired range was used. Thus, the coatability was very poor due to poor dispersion stability and viscosity characteristics, and the water resistance was also poor with a Cobb water absorption test result of 30 g/m² or more, specifically 43 g/m².

## Claims

1. A biodegradable coating composition, which comprises a polyhydroxyalkanoate (PHA) resin; and a dispersant having a degree of saponification of 42% by mole or more,
wherein the polyhydroxyalkanoate resin is a copolymerized polyhydroxyalkanoate resin comprising a 4-hydroxybutyrate (4-HB) repeat unit and comprises the 4-hydroxybutyrate (4-HB) repeat unit in an amount of 0.1% by weight to 60% by weight based on the total weight of the copolymerized polyhydroxyalkanoate resin.

2. The biodegradable coating composition of claim 1, wherein the average degree of polymerization of the dispersant is 200 or less.

3. The biodegradable coating composition of claim 1, wherein the dispersant has a degree of saponification of 80% by mole to 98% by mole and an average degree of polymerization of 100 to 200.

4. The biodegradable coating composition of claim 1, wherein the biodegradable coating composition comprises the dispersant in an amount of 0.01% by weight to 10% by weight based on the total weight of the biodegradable coating composition on the basis of solids content.

5. The biodegradable coating composition of claim 1, wherein the dispersant is at least one selected from the group consisting of a phosphoric acid-based dispersant, a fatty acid-based dispersant, an acrylic-based dispersant, a urethane-based dispersant, and an epoxy-based dispersant, or a polymeric dispersant comprising at least one selected from the group consisting of carboxylic acids, amines, isocyanates, and derivatives thereof.

6. The biodegradable coating composition of claim 1, wherein the polyhydroxyalkanoate resin has an average particle size of less than 150 µm and a polydispersity index (PDI) of less than 3.

7. The biodegradable coating composition of claim 1, wherein the polyhydroxyalkanoate resin comprises at least one repeat unit selected from the group consisting of 3-hydroxybutyrate (3-HB), 4-hydroxybutyrate (4-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

8. The biodegradable coating composition of claim 1, wherein the polyhydroxyalkanoate has an average molecular weight of 10,000 g/mole to 1,200,000 g/mole.

9. The biodegradable coating composition of claim 1, wherein the biodegradable coating composition further comprises at least one additive selected from the group consisting of rheology modifiers, antioxidants, stabilizers, antibacterial agents, antifoaming agents, preservatives, and pH adjusting agents.

10. The biodegradable coating composition of claim 1, wherein the biodegradable coating composition has an acidity of 3 to 11 and a viscosity of 100 mPa s to 1,000 mPa s.

11. A process for preparing a biodegradable coating composition, which comprises mixing and stirring a polyhydroxyalkanoate (PHA) resin and a dispersant having a degree of saponification of 42% by mole or more,
wherein the polyhydroxyalkanoate resin is a copolymerized polyhydroxyalkanoate resin comprising a 4-hydroxybutyrate (4-HB) repeat unit and comprises the 4-hydroxybutyrate (4-HB) repeat unit in an amount of 0.1% by weight to 60% by weight based on the total weight of the copolymerized polyhydroxyalkanoate resin.

12. The process for preparing a biodegradable coating composition of claim 11, wherein the stirring step is carried out for 15 minutes to 60 minutes at 750 rpm to 10,000 rpm.

13. The process for preparing a biodegradable coating composition of claim 11, which further comprises a filtering step and a washing step after the stirring step

14. The process for preparing a biodegradable coating composition of claim 13, which further comprises a redispersion step after the filtering step and the washing step.

15. A biodegradable article, which comprises a substrate; and a biodegradable coating layer,
wherein the biodegradable coating layer comprises a polyhydroxyalkanoate (PHA) resin and a dispersant having a degree of saponification of 42% by mole or more, and the polyhydroxyalkanoate resin is a copolymerized polyhydroxyalkanoate resin comprising a 4-hydroxybutyrate (4-HB) repeat unit and comprises the 4-hydroxybutyrate (4-HB) repeat unit in an amount of 0.1% by weight to 60% by weight based on the total weight of the copolymerized polyhydroxyalkanoate resin.

16. The biodegradable article of claim 15, wherein the biodegradable coating layer has a water resistance of less than 35 g/m².
